# EUROPÄISCHE PATENTSCHRIFT

(11) **EP 3 152 453 B1**
(45) Veröffentlichungstag und Bekanntmachung des Hinweises auf die Patenterteilung: **23.08.2023**
(21) Anmeldenummer: 15728797.0
(22) Anmeldetag: 03.06.2015
(51) Int. Cl.: F16F 9/32

(54) **FLANSCH ZUR VERBINDUNG EINES SCHWINGUNGSDÄMPFERROHRES MIT EINEM MODULROHR EINES SCHWINGUNGSDÄMPFERS**
FLANGE FOR CONNECTING A VIBRATION DAMPER TUBE TO A MODULE TUBE OF A VIBRATION DAMPER
BRIDE DE LIAISON D'UN TUYAU D'AMORTISSEUR DE VIBRATIONS AVEC UN TUYAU DE MODULE D'UN AMORTISSEUR DE VIBRATIONS

(30) Priorität: 06.06.2014 DE 102014108027
(43) Veröffentlichungstag der Anmeldung: 12.04.2017
(73) Patentinhaber: thyssenkrupp Bilstein GmbH, 58256 Ennepetal (DE); thyssenkrupp AG, 45143 Essen (DE)
(72) Erfinder: SCHMIDT, Klaus, 51519 Odenthal (DE); FRITZ, Michael, 58339 Breckerfeld (DE)
(74) Vertreter: thyssenkrupp Intellectual Property GmbH
(86) Internationale Anmeldenummer: PCT/EP2015/062357
(87) Internationale Veröffentlichungsnummer: WO 2015/185612

(56) Entgegenhaltungen:
- WO-A1-2014/086897
- US-A1- 2008 245 630

## Beschreibung

Die vorliegende Erfindung betrifft einen Flansch zur Verbindung eines Schwingungsdämpferrohres mit einem Modulrohr eines Schwingungsdämpfers, wobei der Flansch ein oder mehrere Fluidkanäle aufweist, durch die das Modulrohr mit dem Schwingungsdämpferrohr fluidisch gekoppelt ist, wobei ein Kunststoffkörper vorgesehen ist, in dem die Fluidkanäle zur fluidischen Kopplung ausgebildet ist, wobei ein Kunststoffkörper vorgesehen ist, in dem der Fluidkanal zur fluidischen Kopplung ausgebildet ist und wobei Verbindungselemente vorgesehen sind, die sich zwischen dem Schwingungsdämpferrohr und dem Modulrohr erstrecken und durch die eine haltende Verbindung zwischen dem Schwingungsdämpferrohr und dem Modulrohr gebildet ist. Die Erfindung richtet sich ferner auf einen Schwingungsdämpfer mit einem solchen Flansch.

### STAND DER TECHNIK

Aus der DE 11 2007 002 377 T5 ist ein Schwingungsdämpfer mit einem Schwingungsdämpferrohr bekannt und es ist ein externes Modulrohr vorgesehen, in dem eine weitere Ventilanordnung aufgenommen ist. Das Modulrohr erstreckt sich dabei senkrecht zum Schwingungsdämpferrohr, und der Flansch zur Verbindung des Modulrohres mit dem Schwingungsdämpferrohr ist durch das Modulrohr selbst gebildet.

Aus der DE 11 2008 001 980 T5 ist ein Schwingungsdämpfer mit einem Schwingungsdämpferrohr und mit einem externen Modulrohr bekannt, in dem eine Ventilkörperanordnung aufgenommen ist. Zwischen dem Schwingungsdämpferrohr und dem Modulrohr befinden sich Transferringe, die einen Flansch zwischen den beiden Rohren bilden, der über das Modulrohr am Schwingungsdämpferrohr haltend angebracht ist. Durch die Transferringe hindurch sind Fluidkanäle gebildet, um die Ventilkörperanordnung im externen Modulrohr mit dem Schwingungsdämpferrohr zu verbinden. Dabei ist der maximal mögliche Abstand vom Modulrohr zum Schwingungsdämpferrohr durch die Ausführung der Transferringe baulich begrenzt.

Die Verbindung zwischen dem Modulrohr und dem Schwingungsdämpferrohr muss neben der fluidischen Verbindungsfunktion eine mechanische Haltefunktion erfüllen. Dabei ist aufgrund der großen dynamischen Belastung eines Schwingungsdämpferrohres eine große mechanische Festigkeit des Modulrohres am Schwingungsdämpferrohr gefordert, und wenn der Abstand zwischen dem Modulrohr und dem Schwingungsdämpferrohr beispielsweise aus baulichen Gründen vergrößert werden muss, kann die Flanschverbindung zwischen dem Modulrohr und dem Schwingungsdämpferrohr nicht mehr nur durch Transferringe gebildet werden, da diese mechanisch nicht hinreichend belastbar sind.

Zwar kann ein Flansch aus einem metallischen Werkstoff bereitgestellt werden, der eine hohe Festigkeit zwischen dem Modulrohr und dem Schwingungsdämpferrohr ermöglicht, insbesondere dann wenn die Rohre mit dem Flansch verschweißt werden, jedoch kann ein Flansch beispielsweise aus einem metallischen Vollmaterial schnell ein hohes Gewicht aufweisen. Insbesondere dann, wenn Schwingungsdämpferrohre als ungefederte Massen an einem Fahrzeug Verwendung finden, ist es wichtig, ein geringes Gewicht des Schwingungsdämpfers zu erreichen. Einen Flansch aus einem Kunststoffmaterial wäre zwar leichter, dieser würde aber die geforderte Festigkeit nicht erreichen, und das Modulrohr wäre am Schwingungsdämpferrohr mechanisch nicht hinreichend fest angebracht.

Wird beispielsweise ein Flansch aus einem metallischen Vollmaterial hergestellt, so ergibt sich ferner das Problem der Abdichtung der Fluidkanäle zu den Rohrkörpern. Die Fluidkanäle müssen den Flansch durchwandern und mit Öffnungen in Verbindung gebracht werden, die im Schwingungsdämpferrohr und im Modulrohr eingebracht sind. Wird die Verbindung zwischen dem Flansch und den Rohren durch eine Schweißverbindung gebildet, entsteht die Schwierigkeit der Abdichtung zwischen den Fluidkanälen im Flansch und den Außenseite der Rohre.

Durch eine Kombination eines Kunststoffkörpers, in dem wenigstens ein Fluidkanal ausgebildet ist und durch zusätzliche Verbindungselemente kann das Gewicht eines Flansches reduziert werden, wobei der Aufbau und insbesondere die Montage des Flansches auch bei höherer erschwert werden kann. Beispielsweise zeigt die DE 103 55 151 A1 einen Flansch zur Verbindung eines Schwingungsdämpferrohres mit einem Modulrohr, wobei ein Kunststoffkörper zwischen den beiden Rohren eingeklemmt wird, und anschließend müssen zwei seitliche Verbindungselemente aus einem Metallwerkstoff an die Außenseite der Rohre geschweißt werden. Hierzu ist eine aufwendige Schweißvorrichtung notwendig.

Die DE 10 2004 034 725 A1 zeigt eine weitere Variante eines Flansches mit einem Verbindungsstück und mit einem Träger, wobei der Träger ein Verbindungselement bildet, das H-förmig ausgestaltet ist. Zur Herstellung des H-förmigen Verbindungselementes sind mehrere Stanz-Biege-Operationen und weitere Schweißvorgänge notwendig, sodass der so gebildete Flansch aufwendig hergestellt werden muss.

Schließlich zeigt die DE 195 27 849 C1 einen Flansch zur Verbindung eines Schwingungsdämpferrohres mit einem externen Modulrohr eines Schwingungsdämpfers, wobei ein tüllenartiger Übergangskörper mit jeweiliger trichterförmiger Öffnung zum Modulrohr und Schwingungsdämpferrohr vorgesehen ist. Der Übergangskörper muss aufwendig durch ein Umformverfahren hergestellt werden und die Kontaktflächen des Übergangskörpers müssen an die Mantelflächen der Rohre angepasst werden. Dadurch wird zwar ein Verbindungselement gebildet, das an die Rohre angeschweißt werden kann. Das in den Übergangskörper einzusetzende Kunststoffelement, das als Stützkörper bezeichnet wird, ist jedoch als Einzelteil ausgeführt und muss dann in den Übergangskörper eingesetzt werden, wenn dieser beispielsweise bereits am Modulrohr angeschweißt worden ist. Folglich müssen die Schweißvorgänge unterbrochen werden durch das Einsetzen des Kunststoffkörpers, wodurch die Montage des Flansches erschwert ist.

US2008/245630 offenbart die Merkmale des Oberbegriffes der Ansprüche 1 und 11. WO2014/086897 gilt als Stand der Technik gemäß Artikel 54(3) EPÜ.

### OFFENBARUNG DER ERFINDUNG

Aufgabe der Erfindung ist die Weiterbildung eines Flansches zur Verbindung eines Schwingungsdämpferrohres mit einem Modulrohr eines Schwingungsdämpfers und die Bereitstellung eines Schwingungsdämpfers mit einem verbesserten Flansch, wobei der Flansch auf einfache Weise ausgeführt und einfach montierbar sein soll. Insbesondere soll der Flansch als einzeln handhabbare Baugruppe der Montage an das Schwingungsdämpferrohr und an das Modulrohr bereitgestellt werden können.

Diese Aufgabe wird ausgehend von einem Flansch gemäß dem Oberbegriff des Anspruches 1 und ausgehend von einem Schwingungsdämpfer gemäß dem Oberbegriff des Anspruches 12 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass der Kunststoffkörper zwei sich gegenüberliegende Seitenwände aufweist und dass die Verbindungselemente durch an den Seitenwänden angeordnete metallische Platten gebildet sind, wobei der Kunststoffkörper Haltemittel zum Halten der Platten aufweist.

Mit der erfindungsgemäßen Weiterbildung eines Flansches zur Verbindung eines Schwingungsrohres mit einem Modulrohr wird der Vorteil erreicht, dass der Flansch auf einfache Weise ausgeführt werden kann und lediglich aus einem Kunststoffkörper und beispielsweise zwei Verbindungselementen bestehen kann. Die Verbindungselemente können erfindungsgemäß vor der Anordnung des Flansches an den Schwingungsdämpfer und an den Kunststoffkörper angebracht werden, so dass man zur Montage des Flansches eine einfach handhabbare Baugruppe aus dem Kunststoffkörper und aus beispielsweise zwei Verbindungselementen erhält, und die Verbindung der Verbindungselemente an das Schwingungsdämpferrohr und/oder an das Modulrohr kann auf einfachere Weise ausgeführt werden. Beispielsweise muss keine aufwendige Schweißvorrichtung vorgesehen werden, wenn der erfindungsgemäße Flansch mit dem Modulrohr und/oder Schwingungsdämpferrohr verbunden werden muss, da die an die Rohre anzuschweißenden Verbindungselemente bereits durch den Kunststoffkörper gehalten und mit besonderem Vorteil auch bereits ausgerichtet sind. Dieser Vorteil wird erst durch die erfindungsgemäße haltende Anordnung der als Platten ausgeführten Verbindungselemente am Kunststoffkörper erreicht.

Erfindungsgemäß sind die Haltemittel durch am Kunststoffkörper ausgebildete Nuten gebildet. Die Nuten können als Führungsnuten ausgebildet sein, und die Platten können beispielsweise seitlich in die Führungsnuten eingeschoben werden. Alternativ können die Nuten auch so ausgebildet sein, dass die metallischen Platten gegen die Seitenwände des Kunststoffkörpers gedrückt werden, und die metallischen Platten können in die Nuten einrasten oder in diese hineinrutschen, so dass die metallischen Platten beispielsweise an den Kunststoffkörper angeklipst werden.

Insbesondere können die Nuten die Seitenwände an zwei sich gegenüberliegenden Kanten am Kunststoffkörper begrenzen und parallel zueinander verlaufen. Mit besonderem Vorteil können zur Befestigung jeder der metallischen Platten zwei zueinander beabstandete Nuten vorgesehen sein, in die die Platten über zugeordnete Seitenkanten eingedrückt werden können.

Mit weiterem Vorteil können die Platten in und/oder zwischen den sich gegenüberliegenden Haltemitteln geklemmt sein und so selbsthaltend am Kunststoffkörper angeordnet werden. Hierfür kann beispielsweise die Breite der Nuten kleiner ausgeführt sein als die Dicke der Platten. Alternativ oder zusätzlich kann der Abstand der sich gegenüberliegenden und an der Seitenwand begrenzenden Nuten kleiner sein als die Höhe der Platten. Der Kunststoffkörper kann aus einem gummielastischen Material, beispielsweise aus einem Elastomer, ausgebildet sein, oder der Kunststoffkörper weist einen Kunststoff auf, der eine höhere Formstabilität umfasst. Dabei kann die Klemmwirkung der Platten am Kunststoffkörper zwischen den Nuten so vorgesehen sein, dass die Kunststoffplatten in die Nuten regelrecht eingepresst werden müssen. Dadurch entsteht eine besondere Haltewirkung der metallischen Platten am Kunststoffkörper.

Mit weiterem Vorteil können die Platten an den sich gegenüberliegenden Seitenwänden am Kunststoffkörper im Wesentlichen anliegen und diese vollständig abdecken. Der Kunststoffkörper kann vorzugsweise würfelförmig ausgeführt sein, wobei die stirnseitigen Rohrkontaktflächen des Kunststoffkörpers, die gegen die Außenmantelfläche des Schwingungsdämpferrohres und des Modulrohres zur Anlage gebracht werden, eine entsprechende konkave Ausgestaltung aufweisen können. Die Seitenplatten begrenzen dabei seitlich den würfelförmigen Kunststoffkörper, und die metallischen Platten können vorzugsweise eben ausgeführt sein und erstrecken sich gerade zwischen den Rohren des Schwingungsdämpfers und des Moduls.

Mit besonderem Vorteil können die metallischen Platten quadratisch ausgebildet sein, so dass bei der Montage nicht darauf geachtet werden muss, in welcher Ausrichtung die quadratischen Platten in die Führungsnuten eingeschoben werden.

Die Platten können zwei sich gegenüberliegende Stirnseiten aufweisen, wobei eine erste Stirnseite mit dem Schwingungsdämpferrohr und eine zweite Stirnseite mit dem Modulrohr verschweißbar ist. Die sich gegenüberliegenden Stirnseiten bilden die Begrenzung der metallischen Platten in einer Querrichtung, wobei die sich gegenüberliegenden Kanten, die in die Nuten am Kunststoffkörper eingeschoben werden, die Begrenzung der rechteckigen metallischen Platte quer zu den Stirnseiten bilden. Die metallischen Platten müssen dabei nicht zwingend rechteckig bzw. quadratisch ausgebildet sein, und es ist auch eine von einer geraden Kante abweichende Kontur denkbar, mit der die metallischen Platten über die Haltemittel am Kunststoffkörper angebracht werden. Jedoch sollten die Stirnseiten zum Kontakt an das Modulrohr oder an das Schwingungsdämpferrohr vorzugsweise gerade ausgebildet sein, so dass über die Stirnseiten eine Schweißnaht gezogen werden kann, um die Platten mit den Stirnseiten an den Rohren zu verschweißen.

Mit besonderem Vorteil können die Haltemittel mit einem Umgriff an den Kanten des Kunststoffkörpers ausgebildet sein, wobei die Umgriffe in ihrer Längserstreckung gegenüber den Nuten verkürzt ausgebildet sein können.

Dadurch wird erreicht, dass die Stirnseiten der Platten über ihrer gesamten Höhe frei liegen, und wenn eine Schweißnaht hergestellt wird, mit der die Platten an die Rohre angeschweißt werden, so liegen in den angrenzenden Bereich an die Rohre die Stirnseiten der Platten frei, ohne dass ein Umgriff der Haltemittel zur Bildung der Nuten den Schweißbereich der Stirnseiten verdecken würde.

Die vorliegende Erfindung richtet sich weiterhin auf einen Schwingungsdämpfer mit einem Schwingungsdämpferrohr und mit einem Modulrohr, wobei das Modulrohr mit einem Flansch am Schwingungsdämpferrohr angebunden ist, und wobei der Flansch ein oder mehrere Fluidkanäle aufweist, durch die das Modulrohr mit dem Schwingungsdämpferrohr fluidisch gekoppelt ist, und wobei der Flansch einen Kunststoffkörper aufweist, in dem der Fluidkanal zur fluidischen Kopplung ausgebildet ist und wobei der Flansch Verbindungselemente aufweist, die sich zwischen dem Schwingungsdämpferrohr und dem Modulrohr erstrecken und durch die eine erhaltende Verbindung zwischen dem Schwingungsdämpferrohr und dem Modulrohr gebildet ist. Erfindungsgemäß wird dabei ein Kunststoffkörper mit zwei sich gegenüberliegenden Seitenwänden vorgeschlagen und die Verbindungselemente können an den Seitenwänden angeordnete metallische Platten bilden, wobei der Kunststoffkörper Haltemittel zum Halten der Platten aufweist. Die weiteren Merkmale und zugeordneten Vorteile, die vorstehend im Zusammenhang mit einem Flansch aufgeführt sind, finden für den erfindungsgemäßen Schwingungsdämpfer mit einem solchen Flansch auf gleiche Weise Berücksichtigung.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische, abschnittsweise und schematische Ansicht eines Schwingungsdämpfers mit einem erfindungsgemäßen Flansch zwischen einem Dämpferrohr und einem Modulrohr,
- Figur 2: eine perspektivische Ansicht eines Flansches mit plattenförmigen Verbindungselementen, die an einem Kunststoff angeordnet sind und
- Figur 3: eine perspektivische Ansicht des Flansches in einer fertig montierten Anordnung, und der Flansch kann in der gezeigten Anordnung an ein Schwingungsdämpferrohr und an ein Modulrohr gemäß Figur 1 angebracht werden.

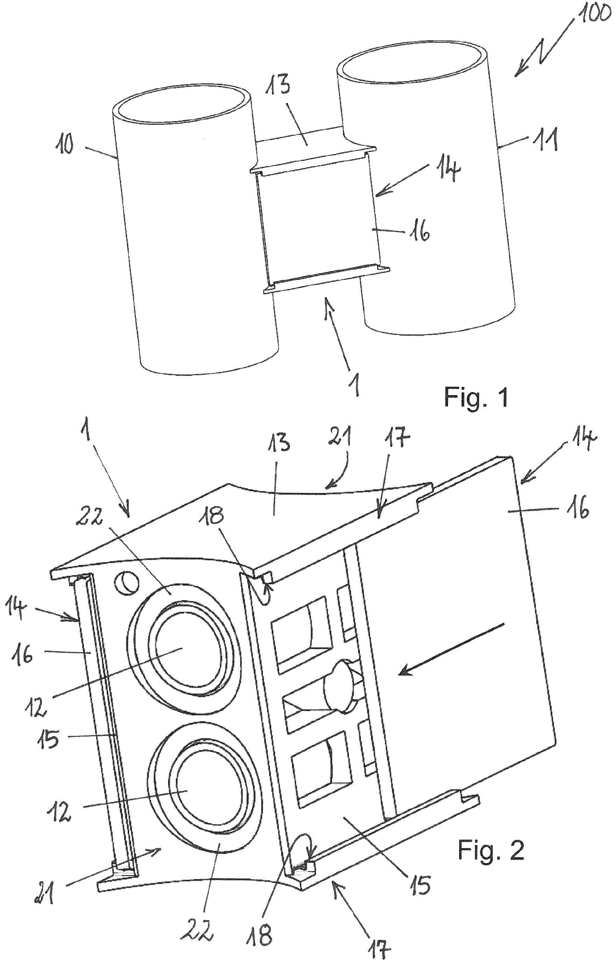

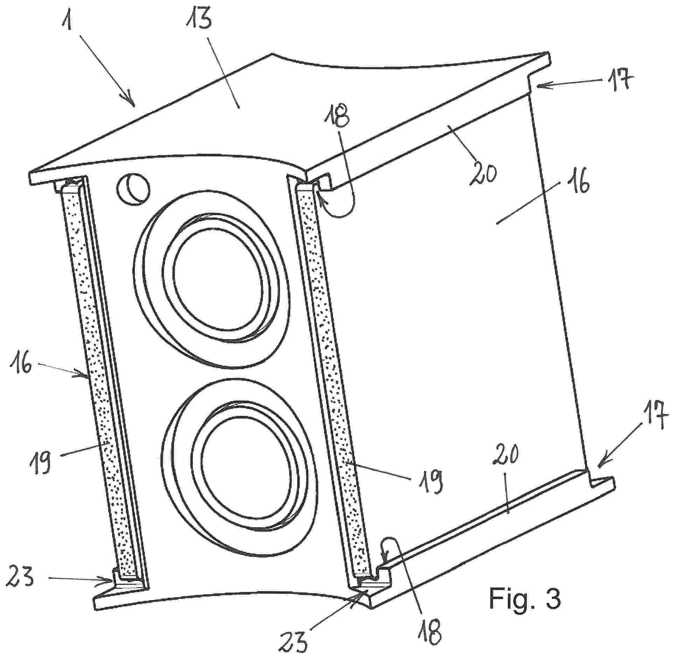

Figur 1 zeigt in einer perspektivischen Ansicht ein Ausführungsbeispiel eines Schwingungsdämpfers 100 mit einem Schwingungsdämpferrohr 10 und einem externen Modulrohr 11, und zwischen dem Schwingungsdämpferrohr 10 und dem Modulrohr 11 ist ein Flansch 1 angeordnet. Der Flansch 1 verbindet das Modulrohr 11 mit dem Schwingungsdämpferrohr 10, so dass das Modulrohr 11 über den Flansch 1 haltend am Schwingungsdämpferrohr 10 angebracht ist. Das Schwingungsdämpferrohr 10 und das Modulrohr 11 sind lediglich abschnittsweise schematisch gezeigt, und im Modulrohr 11 kann beispielsweise eine Ventilbaugruppe aufgenommen sein, die über Fluidkanäle im Flansch 1 mit dem Schwingungsdämpferrohr 10 fluidisch kommuniziert. Alternativ kann im Modulrohr 11 ein zusätzliches Dämpfervolumen ausgebildet sein, welches ebenfalls Fluidkanäle im Flansch 1 erfordert, um mit dem Schwingungsdämpferrohr 10 fluidisch zu kommunizieren. Ein bevorzugtes Ausführungsbeispiel des Flansches 1 mit den Merkmalen der vorliegenden Erfindung ist in den Figuren 2 und 3 im Folgenden näher beschrieben.

Figur 2 zeigt ein Ausführungsbeispiel eines Flansches 1, das aus einem im Wesentlichen würfelförmigen Kunststoffkörper 13 und aus Verbindungselementen 14 aufgebaut ist. Der Kunststoffkörper 13 ist so ausgebildet, dass dieser bei Anordnung des Modulrohres 11 am Schwingungsdämpferrohr 10 sich vollständig zwischen den beiden Rohren erstreckt. Hierzu besitzt der Kunststoffkörper 13 Rohrkontaktflächen 21, mit denen der Kunststoffkörper 13 an den Außenmantelflächen des Schwingungsrohres 10 und des Modulrohres 11 anliegt. Folglich sind die Rohrkontaktflächen 21 des Kunststoffkörpers 13 konkav ausgebildet und können so vollständig an der Oberfläche der Rohre 10, 11 anliegen.

Zwischen den Rohrkontaktflächen 21 erstrecken sich beispielhaft gezeigt zwei Fluidkanäle 12 durch den Kunststoffkörper 13, um das Modulrohr 11 mit dem Schwingungsdämpferrohr 10 fluidisch zu verbinden. Die Fluidkanäle 12 können direkt in den Kunststoffkörper 13 ausgebildet sein oder Fluidkanäle 12 umfassen metallische Rohreinsätze, die in den Kunststoffkörper 13 eingebracht sind, beispielsweise durch ein Umspritzen. An den Mündungsöffnungen der Fluidkanäle 12 in die Rohrkontaktflächen 21 sind Dichtringe 22 (nicht detailliert gezeigt) eingesetzt, um die Fluidkanäle 12 gegen die Rohre 10 und 11 abzudichten.

Seitlich ist der Kunststoffkörper 13 durch Seitenwände 15 begrenzt, die im Wesentlichen plan ausgeführt sind und lediglich zur Gewichtsminimierung sind Aussparungen in den Seitenwänden 15 des Kunststoffkörpers 13 eingebracht.

Die Seitenwände 15 sind in ihrer Höhenrichtung begrenzt durch zwei Kanten, welche als Haltemittel 17 zur haltenden Anordnung der Verbindungselemente 14 am Kunststoffkörper 13 ausgebildet sind. Die Haltemittel 17 dienen dabei zur klemmenden Aufnahme der als Platten 16 ausgeführten Verbindungselemente 14. Die Platten 16 bestehen z.B. für eine gute Schweißbarkeit aus einem schweißbaren metallischen Werkstoff, wie auch das Schwingungsrohr 10 und das Modulrohr 11. Die Platten 16 sind beispielhaft quadratisch ausgebildet, so dass die Platten 16 unabhängig von ihrer Ausrichtung in die Haltemittel 17 eingesetzt werden können. Die Haltemittel 17 sind beispielhaft als Nuten 18 ausgeführt, in die die Platten 16 eingeführt werden können. Hierfür verlaufen die Nuten 18 auf der Unterseite und auf der Oberseite des Kunststoffkörpers 13 parallel zueinander. Der Abstand der beiden Nuten 18 kann jedoch geringfügig kleiner sein als die Höhe der Platten 16, so dass eine Klemmwirkung entsteht. Ebenfalls kann eine Klemmwirkung erzeugt werden durch Nuten 18, die geringfügig schmaler ausgeführt sind als die Dicken der Platten 16. Der gezeigte Pfeil in der metallischen Platte 16 zeigt die Fügebewegung zum Einschieben der Platte 16 in die als Führungsnut ausgebildeten Nuten 18.

Figur 3 zeigt einen fertig bereitgestellten Flansch 1 mit einem Kunststoffkörper 13, an dem zwei metallische Platten 16 angeordnet sind. Die Platten 16 sind in den Nuten 18 gehalten, die durch Umgriffe 20 gebildet sind, so dass die Umgriffe 20 die Platten über ihre Längskanten umgreifen und somit halten. Quer zu den Längskanten sind die Platten 16 begrenzt durch Stirnseiten 19, über die die Platten 16 mit dem Schwingungsdämpferrohr 10 und dem Modulrohr 11 verschweißt werden. Dabei kann der Flansch 1 als fertig vormontierte Baugruppe an das Schwingungsdämpferrohr 10 und an das Modulrohr 11 herangeführt werden, und die Abbildung zeigt die Umgriffe 20 zur Bildung der Nuten 18, die kürzer ausgeführt sind als die Nuten 18 selbst. Dabei entstehen vordere Freischnitte 23, so dass die Stirnseiten 19 über ihrer vollen Höhe seitlich zugänglich sind, beispielsweise für eine Schweißvorrichtung.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 100: Schwingungsdämpfer

- 1: Flansch

- 10: Schwingungsdämpferrohr
- 11: Modulrohr
- 12: Fluidkanal
- 13: Kunststoffkörper
- 14: Verbindungselement
- 15: Seitenwand
- 16: Platte
- 17: Haltemittel
- 18: Nut
- 19: Stirnseite
- 20: Umgriff
- 21: Rohrkontaktfläche
- 22: Dichtring

## Patentansprüche

1. Flansch (1) zur Verbindung eines Schwingungsdämpferrohres (10) mit einem Modulrohr (11) eines Schwingungsdämpfers (100), wobei der Flansch (1) ein oder mehrere Fluidkanäle (12) aufweist, zur fluidischen Koppelung eines Modulrohrs (11) mit einem Schwingungsdämpferrohr (10) , wobei ein Kunststoffkörper (13) vorgesehen ist, in dem der Fluidkanal (12) zur fluidischen Kopplung ausgebildet ist und wobei Verbindungselemente (14) vorgesehen sind, geeignet um sich zwischen dem Schwingungsdämpferrohr (10) und dem Modulrohr (11) zu erstrecken und durch die eine haltende Verbindung gebildet ist zur Verbindung eines Schwingungsdämpferrohres (10) mit einem Modulrohr (11) eines Schwingungsdämpfers (100),
**dadurch gekennzeichnet, dass** der Kunststoffkörper (13) zwei sich gegenüberliegende Seitenwände (15) aufweist und dass die Verbindungselemente (14) durch an den Seitenwänden (15) angeordnete metallische Platten (16) gebildet sind, wobei der Kunststoffkörper (13) Haltemittel (17) zum Halten der Platten (16) aufweist, wobei die Haltemittel (17) durch am Kunststoffkörper (13) ausgebildete Nuten (18) gebildet sind.

2. Flansch (1) nach Anspruch 1, **dadurch gekennzeichnet, dass** die Nuten (18) als Führungsnuten ausgebildet sind, in die die Platten (16) eingeführt sind.

3. Flansch (1) nach einem der Ansprüche 1 oder 2, **dadurch gekennzeichnet, dass** die Nuten (18) die Seitenwände (15) an zwei sich gegenüberliegenden Kanten am Kunststoffkörper (13) begrenzen und parallel zueinander verlaufen.

4. Flansch (1) nach einem der vorgenannten Ansprüche, **dadurch gekennzeichnet, dass** die Platten (16) in und/oder zwischen den sich gegenüberliegenden Haltemitten (17) geklemmt sind und selbsthaltend am Kunststoffkörper (13) angeordnet sind.

5. Flansch (1) nach einem der vorgenannten Ansprüche, **dadurch gekennzeichnet, dass** die Platten (16) die sich gegenüberliegenden Seitenwände (15) am Kunststoffkörper (13) im Wesentlichen vollständig abdecken.

6. Flansch (1) nach einem der vorgenannten Ansprüche, **dadurch gekennzeichnet, dass** die Platten (16) eben und quadratisch ausgebildet sind.

7. Flansch (1) nach einem der vorgenannten Ansprüche, **dadurch gekennzeichnet, dass** die Platten (16) zwei sich gegenüberliegende Stirnseiten (19) aufweisen, wobei eine erste Stirnseite (19) mit dem Schwingungsdämpferrohr (10) und eine zweite Stirnseite (19) mit dem Modulrohr (11) verschweißbar ist.

8. Flansch (1) nach einem der Ansprüche 1 bis 7, **dadurch gekennzeichnet, dass** die Haltemittel (17) durch Umgriffe (20) an den Kanten des Kunststoffkörpers (13) ausgebildet sind, wobei die Umgriffe (20) in ihrer Längserstreckung gegenüber den Nuten (18) verkürzt ausgebildet sind.

9. Flansch (1) nach einem der Ansprüche 1 bis 8, **dadurch gekennzeichnet, dass** die Breite der Nuten (18) kleiner ist als die Dicke der Platten (16).

10. Flansch (1) nach einem der Ansprüche 1 bis 9, **dadurch gekennzeichnet, dass** der Abstand der sich gegenüberliegenden und eine Seitenwand (15) begrenzenden Nuten (18) kleiner ist als die Höhe der Platten (16).

11. Schwingungsdämpfer (100) mit einem Schwingungsdämpferrohr (10) und mit einem Modulrohr (11), wobei das Modulrohr (11) mit einem Flansch (1) am Schwingungsdämpferrohr (10) angebunden ist, und wobei der Flansch (1) ein oder mehrere Fluidkanäle (12) aufweist, durch die das Modulrohr (11) mit dem Schwingungsdämpferrohr (10) fluidisch gekoppelt ist, und wobei der Flansch (1) einen Kunststoffkörper (13) aufweist, in dem der Fluidkanal (12) zur fluidischen Kopplung ausgebildet ist und wobei der Flansch (1) Verbindungselemente (14) aufweist, die sich zwischen dem Schwingungsdämpferrohr (10) und dem Modulrohr (11) erstrecken und durch die eine haltende Verbindung zwischen dem Schwingungsdämpferrohr (10) und dem Modulrohr (11) gebildet ist,
**dadurch gekennzeichnet, dass** der Kunststoffkörper (13) zwei sich gegenüberliegende Seitenwände (15) aufweist und dass die Verbindungselemente (14) durch an den Seitenwänden (15) angeordnete metallische Platten (16) gebildet sind, wobei der Kunststoffkörper (13) Haltemittel (17) zum Halten der Platten (16) aufweist, wobei die Haltemittel (17) durch am Kunststoffkörper (13) ausgebildete Nuten (18) gebildet sind.

## Claims

1. A flange (1) for connecting a vibration damper tube (10) to a module tube (11) of a vibration damper (100), wherein the flange (1) comprises one or more fluid ducts (12), by which the module tube (11) is fluidically coupled to the vibration damper tube (10), wherein a plastic body (13) is provided, in which the fluid duct (12) for the fluidic coupling is formed and wherein connection elements (14) are provided to extend between the vibration damper tube (10) and the module tube (11) and which form a retaining connection between a vibration damper tube (10) and a module tube (11),
**characterized in that** the plastic body (13) comprises two opposite side walls (15) and **in that** the connection elements (14) are formed by metal plates (16) arranged on the side walls (15), the plastic body (13) comprising retaining means (17) for the retaining of the plates (16), wherein the retaining means (17)are formed by grooves (18)configured on the plastic body (13) .

2. The flange (1) as claimed in claim 1, **characterized in that** the grooves (18) are configured as guide grooves into which the plates (16) are inserted.

3. The flange (1) as claimed in one of claims 1 or 2, **characterized in that** the grooves (18) limit the side walls (15) at two opposite edges of the plastic body (13) and run parallel to each other.

4. The flange (1) as claimed in one of the preceding claims, **characterized in that** the plates (16) are clamped into and/or between the opposite retaining means (17) and are arranged in self-retaining manner on the plastic body (13).

5. The flange (1) as claimed in one of the preceding claims, **characterized in that** the plates (16) substantially entirely cover the opposite side walls (15) on the plastic body (13).

6. The flange (1) as claimed in one of the preceding claims, **characterized in that** the plates (16) are flat and square in configuration.

7. The flange (1) as claimed in one of the preceding claims, **characterized in that** the plates (16) have two opposite end faces (19), where a first end face (19) can be welded to the vibration damper tube (10) and a second end face (19) to the module tube (11).

8. The flange (1) as claimed in one of claims 1 to 7, **characterized in that** the retaining means (17) are designed with wrap-around strips (20) at the edges of the plastic body (13), while the wrap-around strips (20) are shorter in their lengthwise extension than the grooves (18).

9. The flange (1) as claimed in one of claims 1 to 8, **characterized in that** the width of the grooves (18) is smaller than the thickness of the plates (16).

10. The flange (1) as claimed in one of claims 1 to 9, **characterized in that** the spacing between the opposite grooves (18) limiting a side wall (15) is less than the height of the plates (16).

11. A vibration damper (100) with a vibration damper tube (10) and with a module tube (11), wherein the module tube (11) is attached by a flange (1) to the vibration damper tube (10), and wherein the flange (1) comprises one or more fluid ducts (12), through which the module tube (11) is fluidically coupled to the vibration damper tube (10), and wherein the flange (1) comprises a plastic body (13) in which the fluid duct (12) for the fluidic coupling is formed and wherein the flange (1) comprises connection elements (14) which extend between the vibration damper tube (10) and the module tube (11) and by which a retaining connection is formed between the vibration damper tube (10) and the module tube (11),
**characterized in that** the plastic body (13) comprises two opposite side walls (15) and **in that** the connection elements (14) are formed by metal plates (16) arranged on the side walls (15), the plastic body (13) comprising retaining means (17) for the retaining of the plates (16), wherein the retaining means (17)are formed by grooves (18) configured on the plastic body (13) .

## Revendications

1. Bride (1) pour la liaison d'un tube d'amortisseur de vibrations (10) à un tube modulaire (11) d'un amortisseur de vibrations (100), la bride (1) présentant un ou plusieurs canaux de fluide (12) pour le couplage fluidique d'un tube modulaire (11) à un tube d'amortisseur de vibrations (10), un corps en matière plastique (13) étant prévu, dans lequel le canal de fluide (12) est réalisé pour le couplage fluidique, et des éléments de liaison (14) étant prévus, appropriés pour s'étendre entre le tube d'amortisseur de vibrations (10) et le tube modulaire (11) et par lesquels est formée une liaison de maintien pour la liaison d'un tube d'amortisseur de vibrations (10) avec un tube modulaire (11) d'un amortisseur de vibrations (100),
**caractérisée en ce que** le corps en matière plastique (13) présente deux parois latérales opposées (15) et **en ce que** les éléments de liaison (14) sont formés par des plaques métalliques (16) agencées sur les parois latérales (15), le corps en matière plastique (13) présentant des moyens de maintien (17) pour le maintien des plaques (16), les moyens de maintien (17) étant formés par des rainures (18) réalisées sur le corps en matière plastique (13).

2. Bride (1) selon la revendication 1, **caractérisée en ce que** les rainures (18) sont réalisées sous la forme de rainures de guidage dans lesquelles sont insérées les plaques (16).

3. Bride (1) selon l'une quelconque des revendications 1 ou 2, **caractérisée en ce que** les rainures (18) délimitent les parois latérales (15) sur deux bords opposés sur le corps en matière plastique (13) et s'étendent parallèlement l'une à l'autre.

4. Bride (1) selon l'une quelconque des revendications précédentes, **caractérisée en ce que** les plaques (16) sont serrées dans et/ou entre les moyens de maintien opposés (17) et sont agencées de manière à se maintenir automatiquement sur le corps en matière plastique (13).

5. Bride (1) selon l'une quelconque des revendications précédentes, **caractérisée en ce que** les plaques (16) recouvrent essentiellement entièrement les parois latérales opposées (15) sur le corps en matière plastique (13) .

6. Bride (1) selon l'une quelconque des revendications précédentes, **caractérisée en ce que** les plaques (16) sont configurées sous forme plane et carrée.

7. Bride (1) selon l'une quelconque des revendications précitées, **caractérisée en ce que** les plaques (16) présentent deux côtés frontaux opposés (19), un premier côté frontal (19) pouvant être soudé au tube d'amortisseur de vibrations (10) et un deuxième côté frontal (19) au tube modulaire (11).

8. Bride (1) selon l'une quelconque des revendications 1 à 7, **caractérisée en ce que** les moyens de retenue (17) sont réalisés par des entourages (20) sur les bords du corps en matière plastique (13), les entourages (20) étant réalisés sous forme raccourcie dans leur extension longitudinale par rapport aux rainures (18).

9. Bride (1) selon l'une quelconque des revendications 1 à 8, **caractérisée en ce que** la largeur des rainures (18) est inférieure à l'épaisseur des plaques (16).

10. Bride (1) selon l'une quelconque des revendications 1 à 9, **caractérisée en ce que** la distance entre les rainures (18) opposées et délimitant une paroi latérale (15) est inférieure à la hauteur des plaques (16).

11. Amortisseur de vibrations (100) avec un tube d'amortisseur de vibrations (10) et avec un tube modulaire (11), le tube modulaire (11) étant relié par une bride (1) au tube d'amortisseur de vibrations (10), et la bride (1) présentant un ou plusieurs canaux de fluide (12), par lesquels le tube modulaire (11) est couplé fluidiquement au tube d'amortisseur de vibrations (10), et la bride (1) présentant un corps en matière plastique (13) dans lequel le canal de fluide (12) est réalisé pour le couplage fluidique et la bride (1) présentant des éléments de liaison (14), qui s'étendent entre le tube d'amortisseur de vibrations (10) et le tube modulaire (11) et par lesquels est formée une liaison de maintien entre le tube d'amortisseur de vibrations (10) et le tube modulaire (11),
**caractérisé en ce que** le corps en matière plastique (13) présente deux parois latérales opposées (15) et **en ce que** les éléments de liaison (14) sont formés par des plaques métalliques (16) agencées sur les parois latérales (15), le corps en matière plastique (13) présentant des moyens de maintien (17) pour le maintien des plaques (16), les moyens de maintien (17) étant formés par des rainures (18) réalisées sur le corps en matière plastique (13).
